# EUROPÄISCHE PATENTANMELDUNG

(11) **EP 4 369 327 A1**
(43) Veröffentlichungstag der Anmeldung: **15.05.2024**
(21) Anmeldenummer: 23201847.3
(22) Anmeldetag: 05.10.2023
(51) Int. Cl.: G09B 19/00, G16H 20/60

(54) **MODULARE ERSTELLUNG VON KOCHREZEPTEN**

(30) Priorität: 09.11.2022 DE 102022211831
(71) Anmelder: BSH Hausgeräte GmbH, 81739 München (DE)
(72) Erfinder: Kirschbaum, Maike, 82024 Taufkirchen (DE); Djohar, Gabriel, 81369 München (DE)

(57) **Zusammenfassung**

Ein System (100) zur Erstellung von Kochrezepten (205) für ein vorbestimmtes Gericht (210) umfasst: einen ersten Datenspeicher (105) mit einem Template (225) für das Gericht (210), wobei das Template (225) wenigstens einen Basisbaustein (230, 232) und einen Aromabaustein (235) bestimmt; einen zweiten Datenspeicher (110) mit Basisbausteinvarianten für den wenigstens einen Basisbaustein (230, 232) des Templates (225); einen dritten Datenspeicher (115) mit Aromabausteinvarianten für den Aromabaustein (235) des Templates (225); eine Benutzerschnittstelle (130) zur Erfassung einer Auswahl einer Basisbausteinvariante für jeden Basisbaustein (230, 232) und einer Aromabausteinvariante für den Aromabaustein (235) des Templates (225); und eine Verarbeitungseinrichtung (125) zur Bestimmung eines Kochrezepts (205) auf der Basis des Templates (225) und der ausgewählten Bausteinvarianten.

## Beschreibung

Die vorliegende Erfindung betrifft die Erstellung von Kochrezepten. Insbesondere betrifft die Erfindung die automatisierte Erstellung von ansprechenden Kochrezepten und bewegt sich damit im Bereich der automatisierten Rezepttechnologien.

Ein Kochrezept umfasst üblicherweise eine Angabe von Zutaten und Verarbeitungsschritten, so dass ein vorbestimmtes Gericht zubereitet werden kann. Dabei sind die Verarbeitungsschritte und die Zutaten aufeinander abgestimmt, so dass das Gericht durch einen Benutzer nachgearbeitet werden kann. Für die Zubereitung des Gerichts kann ein Küchengerät, insbesondere eine Küchenmaschine, ein Herd, ein Ofen oder ein anderes Gerät verwendet werden. Ein Küchengerät kann auch mehrere derartige Geräte kombinieren, etwa eine Rührmaschine, eine Schneidemaschine und einen Herd, wobei das Kochrezept an das kombinierte Gerät angepasst sein kann. Die Erstellung von Kochrezepten kann ein hohes Maß an chemischen und physikalischen Kenntnissen hinsichtlich des Verhaltens von Zutaten sowie ein erhebliches technisches Wissen über die Funktionsweise von Hausgeräten erfordern. Selbst in langjährigen Ausbildungen zum professionellen Koch wird dieses Wissen teilweise nur unvollständig tradiert. Hinsichtlich der Verwendung neuer technischer Fähigkeiten der Hausgeräte können die genannten Ausbildungsgänge zumeist nur eine langsame Adaption in der Kochprofession gewährleisten.

Eine Entwicklung oder Verbesserung eines Küchengeräts kann verbessert erfolgen, wenn bekannt ist, welche Kochrezepte mit dem Küchengerät tatsächlich umgesetzt werden. Hersteller von Küchengeräten lassen daher häufig Kochrezepte von professionellen Köchen entwickeln, um die Fähigkeiten ihrer Geräte besonders gewinnbringend einzusetzen. Die Entwicklung eines solchen Kochrezepts ist jedoch aufwendig und seine Akzeptanz unter Benutzern der Küchenmaschinen kann schwer vorhergesagt werden.

Es wurde vorgeschlagen, ein Kochrezept automatisiert durch Abwandlung eines anderen Kochrezepts zu erstellen. So kann beispielsweise eine Zutat im Kochrezept durch eine andere Zutat ersetzt werden. Dabei kann darauf geachtet werden, dass eine lebensmittelchemische Aufgabe der Zutat, beispielsweise bezüglich einer Stoffumwandlung während des Zubereitens oder eines geschmacklichen Anteils, möglichst unverändert bleibt. Allerdings ist ein Gericht, das nach mehreren solchen Änderungen zubereitet wird, oft wenig ansprechend.

Es wurde auch vorgeschlagen, ein Gericht in Komponenten zu unterteilen, die unabhängig voneinander zubereitet werden. Die einzelnen Komponenten werden erst unmittelbar vor dem Verzehr kombiniert, beispielsweise durch Anrichten auf einem Teller. Für eine Komponente können mehrere Varianten vorbestimmt sein, so dass ein Benutzer eine Komponente durch eine andere austauschen kann. Allerdings sind durch die mangelnde Interaktion von Zutaten zwischen den Komponenten sowohl eine Finesse als auch eine Flexibilität stark eingeschränkt. So kann beispielsweise nur eine der Komponenten ein Aroma tragen, während die anderen Komponenten unaromatisch sind. Auf diese Weise soll verhindert werden, dass unterschiedliche Aromen auf unangenehme Weise miteinander kollidieren. Gleichzeitig kann dadurch aber auch eine gewünschte oder interessante Interaktion von Aromen verhindert sein.

In Online-Sammlungen finden sich sehr große Sammlungen von Kochrezepten. Es hat sich gezeigt, dass bestimmte Anforderungen von Benutzern darin trotzdem nicht reflektiert sind. Dazu trägt bei, dass die einzelnen Kochrezepte üblicherweise unvollständig, fehlerhaft oder gar nicht bezüglich ihrer ernährungsphysiologischen Eigenschaften beschrieben sind. So ist bei vielen Gerichten beispielsweise nicht bekannt, ob sie sich für eine vorbestimmte Diät eignen oder nicht.

Eine der vorliegenden Erfindung zugrundeliegende Aufgabe besteht in der Bereitstellung einer Systematik bzw. Technologie, mit der zu einem vorbestimmten Gericht auf automatisierte Weise eine Vielzahl unterschiedlicher Kochrezepte bereitgestellt werden kann, ohne zu riskieren, dass einzelne Kochrezepte zu ungenießbaren Ergebnissen führen. Diese Aufgabe wird gelöst durch die Gegenstände der unabhängigen Ansprüche. Unteransprüche geben bevorzugte Ausführungsformen wieder.

Nach einem ersten Aspekt der vorliegenden Erfindung umfasst ein System zur Erstellung von Kochrezepten für ein vorbestimmtes Gericht einen ersten Datenspeicher mit einem Template für das Gericht, wobei das Template wenigstens einen Basisbaustein und einen Aromabaustein bestimmt; einen zweiten Datenspeicher mit Basisbausteinvarianten für den wenigstens einen Basisbaustein des Templates; einen dritten Datenspeicher mit Aromabausteinvarianten für den Aromabaustein des Templates; eine Benutzerschnittstelle zur Erfassung einer Auswahl einer Basisbausteinvariante für jeden Basisbaustein und einer Aromabausteinvariante für den Aromabaustein des Templates; und eine Verarbeitungseinrichtung zur Bestimmung eines Kochrezepts auf der Basis des Templates und der ausgewählten Bausteinvarianten.

Insbesondere wird vorgeschlagen, dass die Bausteine und das Template derart aufeinander abgestimmt sind, dass unterschiedliche Kochrezepte für ein Gericht durch freies Kombinieren der jeweils auswählbaren Varianten für die Bausteine erstellt werden können. So können alle erlaubten Kombinationen von Varianten zu einem Kochrezept für das Gericht führen, das ein schmackhaftes Ergebnis bereitzustellen vermag.

Das System kann es ermöglichen, das berufliche Wissen und die Fertigkeiten eines oder mehrerer professioneller Köche derart zu formalisieren, dass eine automatische Erstellung von ansprechenden Kochrezepten zu einem vorbestimmten Gericht gelingt. Durch die Kombinierbarkeit der Bausteine bzw. deren Varianten nach den Vorgaben des Templates kann eine Vielzahl unterschiedlicher Kochrezepte für dasselbe Gericht generiert werden, ohne einen Eingriff durch eine Person, insbesondere einen Koch, zu erfordern.

Üblicherweise umfasst ein Kochrezept nur zwei oder drei unterschiedliche Bausteine. Selbst wenn für jeden dieser Bausteine nur wenige Alternativen zur Auswahl stehen, kann die Anzahl daraus generierbarer Kochrezepte beträchtlich sein. Allgemein gilt, dass ein exponentieller Zusammenhang zwischen der Anzahl alternativer Bausteine und der Anzahl erstellbarer Kochrezepte besteht. Umfasst ein beispielhaftes Gericht drei Bausteine, für die jeweils drei Auswahlmöglichkeiten bestehen, so können bereits 3 * 3 * 3 = 27 unterschiedliche Kochrezepte erstellt werden. Wird lediglich eine weitere Auswahlmöglichkeit für einen der Bausteine hinzugefügt, so wächst die Anzahl erzeugbarer Kochrezepte auf 3 * 3 * 4 = 36 an. Mit einer zusätzlichen Auswahlmöglichkeit für einen anderen Baustein sind es bereits 3 * 4 * 4 = 48.

Bevorzugt wird das Kochrezept auf der Basis genau eines Aromabausteins sowie eines oder mehrerer Basisbausteine gebildet. Einem Basisbaustein ist eine Vielzahl Basisbausteinvarianten und einem Aromabaustein eine Vielzahl Aromabausteinvarianten zugeordnet, wobei die Varianten jeweils Eigenschaften des übergeordneten Bausteins in sich tragen. Durch das Auswählen einer Basisbausteinvariante wird diese als Realisierung des zugeordneten Basisbausteins übernommen und durch das Auswählen einer Aromabausteinvariante wird diese als Realisierung des Aromabausteins übernommen. Auf der Basis der ausgewählten Varianten kann dann das Kochrezept bereitgestellt werden.

Weiter bevorzugt umfasst ein Basisbaustein und ein Aromabaustein bzw. eine ausgewählte Basisbausteinvariante und eine ausgewählte Aromabausteinvariante jeweils wenigstens einen Verarbeitungsschritt, der eine Zutat angibt. Alle Zutaten des Gerichts können in Verarbeitungsschritten genannt sein, die einem der ausgewählten Bausteine zugeordnet sind. Eigenschaften des Gerichts bezüglich einer Zutat können somit über die Wahl einer Variante für einen Baustein bestimmt werden. So kann beispielsweise eine erste Basisbausteinvariante einen Verarbeitungsschritt umfassen, der als Zutat Fleisch umfasst und somit einer fleischhaltigen Variante des Gerichts zugrunde gelegt werden kann. Eine zweite Basisbausteinvariante kann ohne einen Verarbeitungsschritt auskommen, der als Zutat Fleisch enthält und somit einer fleischlosen oder vegetarischen Variante des Gerichts zu Grunde gelegt werden.

Ein Verarbeitungsschritt kann noch andere Informationen umfassen, beispielsweise ein Küchengerät oder Küchenmaschine, welches zur Verarbeitung der Zutat verwendet werden kann, welche Form, Größe oder Dimension eine Zutat bzw. ein Resultat annehmen soll sowie Informationen darüber, welche Reihenfolge Zutaten innerhalb eines Verarbeitungsschritt einnehmen sollen und wie viel Zeit sie in Anspruch nehmen, ferner eine auf die Zutat bezogene Tätigkeit, eine allgemeine Handlung, Informationen darüber, wie und wo die Handlung auszuführen ist, oder ein Gefäß, in welchem sich die Zutat befindet. Optional kann auch ein Verarbeitungsschritt angegeben sein, der keine Zutat enthält; in diesem Fall kann eine bereits zugegebene Zutat oder ein Zwischenprodukt weiterverarbeitet werden. Alle Handlungen, die erfolgen müssen, um das Gericht zuzubereiten, können durch die Verarbeitungsschritte der ausgewählten Bausteine festgelegt sein. Dabei kann es sich sowohl um im Template festgelegte Verarbeitungsschritte handeln als auch um bausteinvariantenabhängige (individuelle) Verarbeitungsschritte.

Ein Basisbaustein und ein Aromabaustein unterscheiden sich bevorzugt darin, dass wenigstens eine Zutat eines Aromabausteins beziehungsweise eines ihm zugeordneten Verarbeitungsschritts aromatisch ist, während alle Zutaten eines Basisbausteins beziehungsweise aller ihm zugeordneten Verarbeitungsschritte unaromatisch sind. Eine Aromatisierung einer Basisbausteinvariante kann erste durch Verarbeiten einer Zutat des Aromabausteins erfolgen. Dazu kann für alle verwendeten Zutaten bekannt sein, ob sie als aromatisch oder als unaromatisch gilt.

In einer Ausführungsform sind alle Zutaten eines Aromabausteins aromatisch. Der Basisbaustein kann einen charakteristischen Teil des Gerichts festlegen, ohne den es sich um ein anderes Gericht handeln würde. Eine geschmackliche Ausrichtung kann nicht im Basisbaustein, sondern über den Aromabaustein beeinflusst werden. Ein Gericht umfasst maximal einen einzigen Aromabaustein, welcher durch eine von verschiedenen Aromabausteinvarianten realisiert werden kann. Wesentliche Varianten des Gerichts, beispielsweise eine süße oder herzhafte Ausrichtung, können über die Wahl des Aromabausteins bestimmt werden.

Es ist besonders bevorzugt, dass das Template einen ersten Basisbaustein bestimmt, dem eine erste Basisbausteinvariante zugeordnet ist, und einen zweiten Basisbaustein, dem eine zweite Basisbausteinvariante zugeordnet ist; wobei eine erste Zutat einer Aromabausteinvariante des Aromabausteins der ersten Basisbausteinvariante und eine zweite Zutat der Aromabausteinvariante des Aromabausteins der zweiten Basisbausteinvariante zugeordnet ist. Anders ausgedrückt kann eine Aromabausteinvariante während der Zubereitung des Gerichts aromatische Zutaten an verschiedene Basisbausteinvarianten beisteuern. So können sehr ansprechende und differenzierte Geschmackskompositionen erzielt werden.

Da immer nur eine Aromabausteinvariante ausgewählt werden kann, ist verhindert, dass an einem Basisbaustein aromatische Zutaten zusammentreffen, die nicht miteinander harmonieren. Umgekehrt können durch die Verteilung von aromatischen Zutaten auf unterschiedliche Bestandteile des Gerichts erweiterte Möglichkeiten bezüglich der Hervorbringung eines beabsichtigten Geschmacks oder Aromas bestehen. So kann eine Aromabausteinvariante derart auf einen Basisbaustein abgestimmt werden, dass in allen Basisbausteinvarianten ein harmonisches und spannendes Gesamterlebnis des Gerichts entsteht.

Soll beispielsweise eine Kombination von Lachs, Fenchel und Orange thematisiert werden, wobei als Basisbausteine Lachs, Fenchelgemüse und eine Sauce vorgesehen sind, könnte beispielsweise der die Sauce mit Orangensaft verfeinert, das Fenchelgemüse mit Orangenabrieb zubereitet und der Lachs mit gemahlenen Fenchelsamen gewürzt und mit einer Orangenscheibe belegt werden. In einer anderen Variante des Gerichts, in dem das Aroma in eine maritime Richtung gehen soll, könnte die Sauce mit Basilikum und Kapern aromatisiert werden, das Fenchelgemüse mit Thymian und Rosmarin, und der Lachs könnte mit frischen Tomaten zusammen gegart werden.

Es ist weiter bevorzugt, dass das Template dazu eingerichtet ist, Verarbeitungsschritte, die den ausgewählten Bausteinvarianten zugeordnet sind, in eine vorbestimmte Relation zu bringen. Dazu kann das Template Anforderungen für Verarbeitungsschritte umfassen, wobei die Anforderungen durch Verarbeitungsschritte einer Bausteinvariante ausgefüllt werden können. So kann durch das Template ein Ablauf von geforderten Verarbeitungsschritten festgelegt werden, der in Abhängigkeit einer gewählten Bausteinvariante durch passende konkrete Verarbeitungsschritte ausgefüllt wird. Dabei kann es das Template erlauben, Anforderungen für Verarbeitungsschritte zu definieren, die verpflichtend oder optional für das Gericht sind. Ein Kochrezept für das Gericht kann nur erstellt werden, wenn alle verpflichtenden Anforderungen für Verarbeitungsschritte durch einen Verarbeitungsschritt der Basis- oder Aromabausteinvarianten ausgefüllt sind.

Das Template kann auch dafür sorgen, dass kein Verarbeitungsschritt auf einen anderen aufbaut, der nicht vom Rezept umfasst ist. Weiter bevorzugt umfasst ein Basisbaustein wenigstens einen verpflichtenden Verarbeitungsschritt. Ein optionaler Schritt kann von einem Basisbaustein oder einem Aromabaustein umfasst sein. Ein optionaler Verarbeitungsschritt kann von einem verpflichtenden Verarbeitungsschritt oder einem anderen optionalen Verarbeitungsschritt abhängen.

Es ist zu beachten, dass verpflichtende und optionale Verarbeitungsschritte auf Bausteinebene festgelegt sind, damit das Gesamtkonzepts eines Gerichtes funktioniert. Dabei können optionale Verarbeitungsschritte von den jeweiligen Bausteinvarianten bei Bedarf aktiviert werden. Private Verarbeitungsschritte werden hingegen in den einzelnen Bausteinvarianten festgelegt, damit diese möglichst flexibel die grundlegenden Verarbeitungsschritte eines Gerichtes ergänzen können.

Ein Basisbaustein und ein Aromabaustein können jeweils einen oder mehrere optionale Verarbeitungsschritte umfassen. Ein optionaler Verarbeitungsschritt kann von einem verpflichtenden Verarbeitungsschritt oder von einem anderen optionalen Verarbeitungsschritt abhängen. Eine Abhängigkeit erfordert üblicherweise das Vorhandensein eines ersten Verarbeitungsschritts, damit ein zweiter ausgeführt werden kann. Beispielsweise kann eine Zutat in einem zweiten Verarbeitungsschritt nur dann verarbeitet werden, wenn sie in einem ersten Verarbeitungsschritt hinzugefügt wurde.

Eine Basisbausteinvariante oder eine Aromabausteinvariante können jeweils einen oder mehrere private Verarbeitungsschritte umfassen, wobei ein privater Verarbeitungsschritt von einem anderen Verarbeitungsschritt abhängen kann. Allerdings kann kein Verarbeitungsschritt einer Bausteinvariante von einem privaten Verarbeitungsschritt einer anderen Bausteinvariante abhängen. Auf diese Weise kann sichergestellt werden, dass eine Kommunikation der Bausteine untereinander weiterhin möglich ist. So können die verschiedenen Bausteinvarianten Verarbeitungsschritte beisteuern, die nicht im Template vorgesehen sind. Solche privaten Verarbeitungsschritte können sehr flexibel sein und das Gesamtergebnis des Gerichts in weiten Grenzen verändern. Durch das vorher festgelegte Template kann dennoch sichergestellt werden, dass alle Rezeptvarianten die grundlegenden Anforderungen des definierten Gerichts erfüllen. Das Template kann nur verpflichtende und optionale Verarbeitungsschritte definieren.

In einer weiteren Ausführungsform ist ein vierter Datenspeicher mit Attributen von Zutaten von Verarbeitungsschritten von Bausteinvarianten des Gerichts vorgesehen. Die Verarbeitungseinrichtung kann dazu eingerichtet sein, eine Eigenschaft des Gerichts bezüglich eines oder mehrerer auswählbarer Bausteinvarianten zu bestimmen. So kann beispielsweise automatisch festgestellt werden, wie viele Kilokalorien pro Portion das Gericht haben wird, ob es vegetarisch ist oder Gluten enthält. Solche Informationen können als Attribute oder Parameter einem bereitgestellten Kochrezept zugeordnet werden.

In einer weiteren Ausführungsform können Attribute der Zutaten im vierten Datenspeicher dazu verwendet werden, eine Vorauswahl von wählbaren Bausteinvarianten bezüglich einer benutzergesteuerten Vorgabe einer Eigenschaft des Gerichts zu treffen. Möchte ein Benutzer beispielsweise nur Bausteinvarianten eines Gerichts auswählen, die sowohl vegan als auch glutenfrei sind, so kann eine Bausteinvariante, die gegen eine der Vorgaben verstößt, nicht auswählbar gemacht werden. So können auch sehr spezifische Anforderungen bezüglich des Gerichts leicht erfüllt werden. Sind die gestellten Anforderungen durch keine zulässige Kombination von Bausteinvarianten des Gerichts nicht erfüllbar, so kann ein Grund dafür rasch festgestellt und nachvollziehbar angegeben werden.

Über die automatische Kombinierbarkeit der Bausteinvarianten sowie Attributen, die den Bausteinvarianten bzw. den von ihnen umfassten Zutaten zugeordnet sind, können einfach genaue und umfassende Informationen über alle Varianten des Gerichts bestimmt werden. Dabei kann sichergestellt sein, dass die Bestimmungen erschöpfend sind und keine Variante existiert, zu der eine vorbestimmte Eigenschaft nicht bekannt ist, die bezüglich einer anderen Variante bekannt ist. So kann das volle Repertoire erzeugbarer Varianten des Gerichts dem Benutzer für eine Auswahl zugänglich gemacht werden.

In einer Ausführungsform wird ein Kochrezept nach einer Auswahl von Bausteinvarianten dynamisch generiert. In einer anderen Ausführungsform können Kombinationen von Bausteinvarianten eines Gerichts permutiert werden, um eine Vielzahl Kochrezepte für das Gericht zu erhalten. Die solchermaßen bereitgestellten Kochrezepte können dann in einen Datenspeicher geladen werden, wo sie von einem Benutzer eingesehen, durchsucht oder ausgewählt werden können. Einem Kochrezept können dabei Attribute, Parameter oder Eigenschaften zugeordnet sein, nach denen sich der Benutzer bei der Auswahl orientieren kann, beispielsweise welchen Nährwert das Gericht nach dem Kochrezept hat, ob es nussfrei oder fleischlos ist.

Ein hierin beschriebenes System ist nur zur Bereitstellung von Kochrezepten für ein einziges Gericht beschrieben. Es ist jedoch zu verstehen, dass das System auch dazu eingerichtet sein kann, Kochrezepte für eine Vielzahl unterschiedlicher Gerichte bereitzustellen, indem Informationen für mehrere Gerichte verarbeitet werden können. Eine benutzergesteuerte Vorgabe zu einer Eigenschaft des Gerichts kann eine Vorauswahl bezüglich vorhandener Gerichte bewirken. Beispielsweise kann ein Benutzer auswählen, ob er einen Salat, eine Vorspeise, einen Hauptgang oder eine Nachspeise als Gericht umsetzen möchte. In einer gewählten Kategorie kann eine weitere Einschränkung getroffen werden, bis ein Gericht ausgewählt ist, das konfiguriert werden kann, wie hierin beschrieben ist. Der Benutzer kann auch interaktiv durch einen Auswahlprozess für ein Gericht bzw. eine Variante des Gerichts geführt werden.

Nach einem weiteren Aspekt der vorliegenden Erfindung umfasst ein Hausgerätesystem eine Ausführungsform des oben beschriebenen Systems und ist dafür eingerichtet, ein durch die Verarbeitungseinrichtung bestimmtes Kochrezept automatisiert auszuführen. Beispielsweise kann es sich beim Hausgerätesystem um ein Küchengerät oder ein Gargerät handeln. Denkbare Hausgerätesysteme sind z.B. unter dem Namen Cooklt oder Thermomix bekannt.

Nach einem weiteren Aspekt der vorliegenden Erfindung umfasst ein Verfahren zum Erstellen eines Kochrezepts für ein vorbestimmtes Gericht Schritte des Bereitstellens eines dem Gericht zugeordneten Templates, wobei das Template wenigstens einen Basisbaustein sowie einen Aromabaustein bestimmt; des Bereitstellens wenigstens einer Basisbausteinvariante für jeden Basisbaustein des Templates; des Bereitstellens wenigstens einer Aromabausteinvariante für den Aromabaustein des Templates; des Erfassens einer benutzergesteuerten Auswahl je einer Basisbausteinvariante für jeden Basisbaustein des Templates sowie einer Aromabausteinvariante für den Aromabaustein des Templates; und des Bestimmens eines Kochrezepts auf der Basis der ausgewählten Varianten und des Templates.

Das Verfahren kann teilweise oder vollständig mittels eines hierin beschriebenen Systems ausgeführt werden. Dazu kann das System eine elektronische Verarbeitungseinrichtung umfassen, die beispielsweise einen programmierbaren Mikrocomputer oder Mikrocontroller umfasst. Das Verfahren kann in Form eines Computerprogrammprodukts mit Programmcodemitteln vorliegen. Das Computerprogrammprodukt kann auf einem computerlesbaren Datenträger abgespeichert sein. Merkmale und/oder Vorteile des Verfahrens können auf das System bzw. Hausgerätesystem übertragen werden und/oder umgekehrt.

Das Verfahren kann Elemente verwenden, die durch eine oder mehrere unterschiedliche Personen vorbereitet sind, um das Kochrezept in Abhängigkeit einer Auswahl des Benutzers zu erstellen. Beispielsweise kann ein erster Koch ein Template für das Gericht erstellen, wobei er die grundlegenden Verarbeitungsschritte für die Basisbausteine und den Aromabaustein definiert. Ein zweiter Koch kann eine Basisbausteinvariante für ein vorbestimmtes Gericht erstellen. Ein dritter Koch kann eine Aromabausteinvariante für das Gericht bereitstellen. Selbstverständlich können auch mehrere der genannten Tätigkeiten durch denselben Koch erfolgen.

Die vorbereitenden Tätigkeiten der Köche führen erfindungsgemäß zu einer Kombinierbarkeit von Bausteinen, die genießbare Ergebnisse in allen Permutationen sicherstellt. Dabei erfolgt die Erstellung des Kochrezepts vollständig automatisch, nachdem ein Benutzer eine Auswahl für zu verwendende Bausteine getroffen hat.

Nach noch einem weiteren Aspekt der vorliegenden Erfindung umfasst ein Herstellungsverfahren zum Herstellen eines vorbestimmten Gerichts die oben genannten Verfahrensschritte, wobei das Herstellungsverfahren einen Schritt des automatisierten Ausführens des bestimmten Kochrezepts, beispielsweise mittels des genannten Hausgerätesystems, umfasst.

Nicht beschränkende Ausführungsformen der Erfindung werden nun unter Bezug auf die beiliegenden Figuren genauer beschrieben, in denen:
- Figur 1: ein System zur Bereitstellung von Kochrezepten;
- Figur 2: ein beispielhaftes Geflecht von Elementen eines Kochrezepts; und
- Figur 3: ein Ablaufdiagramm eines Verfahrens zur Bereitstellung eines Kochrezepts
darstellt.

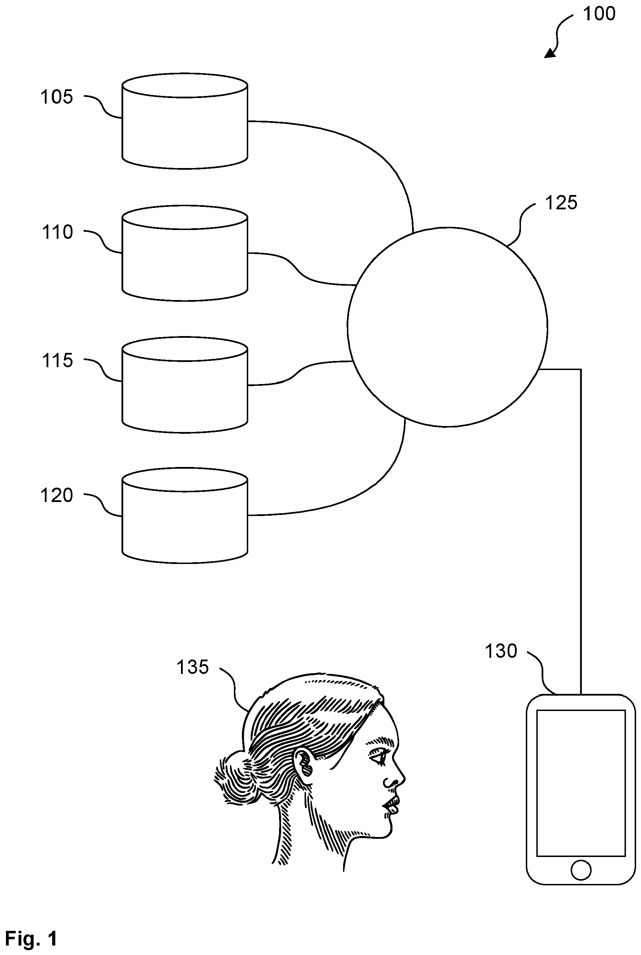

Figur 1 zeigt ein System 100 zur Bereitstellung von Kochrezepten. In der dargestellten Ausführungsform umfasst das System 100 einen ersten Datenspeicher 105, einen zweiten Datenspeicher 110, einen dritten Datenspeicher 115 und einen vierten Datenspeicher 120. Die Datenspeicher 105 bis 120 können auch durch einen gemeinsamen Datenspeicher gebildet sein. Ein Datenspeicher 105 bis 120 kann beispielsweise als Datei, als Datenbank oder beliebige andere Form eines Informationsspeichers ausgeführt sein.

Der erste Datenspeicher 105 umfasst ein Template für das Gericht, der zweite Datenspeicher 110 eine oder mehrere Basisbausteinvarianten für das Gericht, der dritte Datenspeicher 115 eine oder mehrere Aromabausteinvarianten für das Gericht und der vierte Datenspeicher 120 Attribute von Zutaten, die in dem Gericht verwendet werden können. Einer oder mehrere weitere Datenspeicher können vorgesehen sein, um beispielsweise Gefäße, Küchengeräte oder Küchenwerkzeug aufzunehmen.

Mit den Datenspeichern 105 bis 120 ist eine Verarbeitungseinrichtung 125 verbunden. Mittels einer Benutzerschnittstelle 130 kann ein Benutzer 135 mit dem System 100 interagieren. Die Benutzerschnittstelle 130 ist beispielhaft als Smartphone dargestellt, kann aber auch jede andere Einrichtung zur Ein- und Ausgabe von Informationen zwischen dem System 100 und dem Benutzer 135 umfassen. Die Benutzerschnittstelle 130 kann kabelgebunden oder drahtlos ans System 100 angebunden sein. Bevorzugt ist das System 100 dazu eingerichtet, von einer Vielzahl Benutzer 135 über mehrere Benutzerschnittstellen 130 bedient zu werden.

Es ist zu beachten, dass die Benutzerschnittstelle 130 auch dazu verwendet werden kann, Informationen in den Datenspeichern 105 bis 120 anzulegen beziehungsweise zu organisieren. Beispielsweise kann das System 100 zunächst mit Sammlungen von Zutaten, Gefäßen, Küchenmaschinen und Küchengeräten versehen werden. Anschließend kann eine weitere Person, insbesondere ein Koch, Elemente aus den Sammlungen miteinander kombinieren, um ein Template inklusive Basisbausteinen und einem Aromabaustein bereitzustellen. Alternativ kann für das Befüllen der Datenspeicher 105 bis 120 auch eine andere Schnittstelle vorgesehen sein.

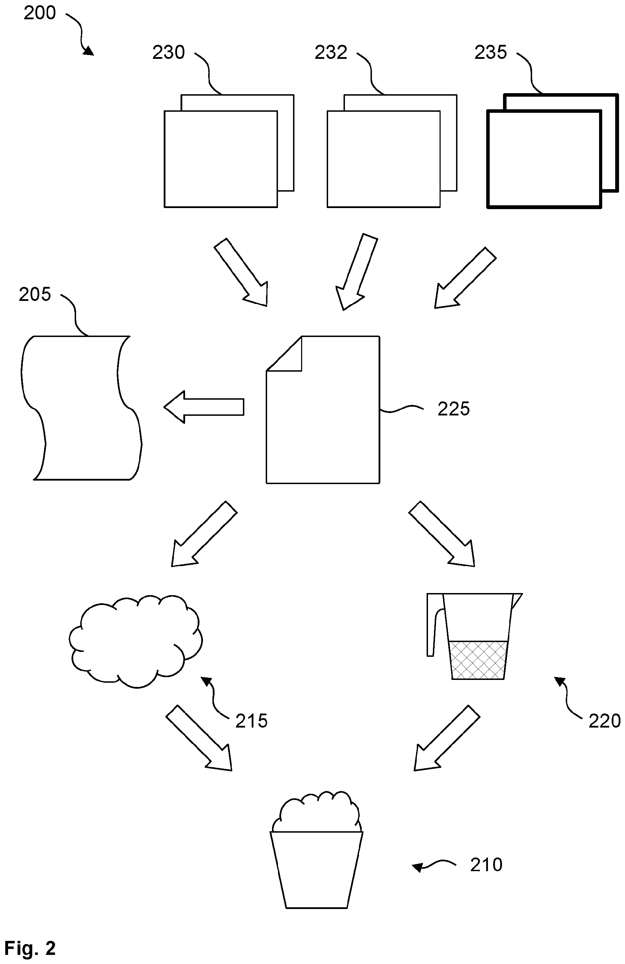

Figur 2 zeigt ein beispielhaftes Geflecht 200 von Elementen zur Bereitstellung eines Kochrezepts 205 für ein vorbestimmtes Gericht 210. Im dargestellten Beispiel betrifft das Gericht 210 beispielhaft "Herzhafte Muffins mit Dip". Das Gericht 210 umfasst beispielhaft einen Teig 215 und einen Dip 220. Sowohl der Teig 215 als auch der Dip 220 werden als charakteristisch für das Gericht 210 angesehen; würde man beispielsweise den Teig 215 durch eine andere Masse ersetzen, so würde das entstehende Gericht 210 nicht mehr die üblichen Anforderungen an einen Muffin erfüllen. Solche Anforderungen können beispielsweise einem Hintergrundwissen eines Zubereitenden oder einer Sammlung von Rezepten für das Gericht 210 entnommen werden. Bevorzugt sind diese Anforderungen möglichst wenig einschränkend und betreffen nur essenzielle Merkmale.

Im vorliegenden Beispiel sind für den Teig 215 zwei unterschiedliche Basisbausteinvarianten 230 vorgesehen, die mit zwei Basisbausteinvarianten 232 für den Dip 220 kombiniert werden können.

Eine erste beispielhafte Basisbausteinvariante 230 für den Teig 215 beschreibt die Erstellung eines klassischen Teigs 215 auf der Basis von Weizenmehl, Eiern, Öl, Salz und Backpulver. Eine zweite beispielhafte Basisbausteinvariante 230 definiert einen veganen Teig 215 auf der Basis von Dinkelmehl, Apfelmus, Öl, Salz, Natron und Apfelessig. Gesteuert durch das Template 225 kann sich der Benutzer 135 für eine der genannten Basisbausteinvarianten 230 für den Teig 215 entscheiden. Andere mögliche Basisbausteinvarianten 230 für den Teig 215 könnten beispielsweise für eine Kohlehydrat-arme oder glutenfreie Ernährung geeignet sein. Selbstverständlich kann ein Attribut wie glutenfrei für mehrere angebotene Teige 215 bzw. zugeordnete Basisbausteinvarianten 230 gelten.

Für den Dip 220 sind im vorliegenden Beispiel nur zwei Basisbausteinvarianten 232 vorgesehen, unter denen der Benutzer 135 wählen kann. Hier umfasst eine erste beispielhafte Basisbausteinvariante 232 Jogurt, Salz, Zitronensaft und Honig, während eine zweite beispielhafte Basisbausteinvariante 232 Quark, Salz, Zucker und Weißweinessig umfasst. Weitere mögliche Basisbausteinvarianten 232 für den Dip 220 können beispielsweise auf Sauerrahm, Kokosnuss mit Joghurt oder Kichererbsen basieren.

Außerdem umfasst das Gericht 210 eine Aromabausteinvariante 235, die den Charakter des Gerichts 210 beeinflussen kann. Vorliegend sind zwei Aromabausteinvarianten 235 vorgesehen, unter denen der Benutzer 135 auswählen kann. Eine erste beispielhafte Aromabausteinvariante 235 umfasst Karotten, Walnüsse und Ingwerwurzel. Eine zweite beispielhafte Aromabausteinvariante 235 umfasst Champignons, Thymian und Feta. Weitere mögliche Aromabausteinvarianten 235 können auf Babyspinat mit Kürbissamen, Speck mit Pilzen, Karotten mit Feta, Pfifferlingen mit Blaubeeren, Kirschtomaten mit Basilikum, Parmesan mit Rosmarin und Olive oder Lachs mit Zucchini basieren.

Es wird vorgeschlagen, die Basisbausteinvarianten 230, 232 derart vorzusehen, dass alle Kombinationen von je einer Basisbausteinvariante 230 für den Teig 215 und einer Basisbausteinvariante 232 für den Dip 220 einem sinnvollen Kochrezept 205 zu Grunde gelegt werden können. Außerdem sollen die Aromabausteinvarianten 235 derart vorgesehen sein, dass sie mit allen Kombinationen von Basisbausteinvarianten 230, 232 kombiniert werden können, um ein Kochrezept 205 für ein ansprechendes Gericht 210 zu bilden. Dabei wird die Kombination von Bausteinvarianten 230, 232 und Aromabausteinvarianten 235 wesentlich durch das Template 225 gesteuert.

Das Template 225 stellt Anforderungen für Verarbeitungsschritte, die durch Verarbeitungsschritte der Basisbausteinvarianten 230, 232 ausgefüllt werden können. Bestimmte Verarbeitungsschritte können verpflichtend sein, um sicherzustellen, dass charakteristische Elemente des vorliegenden Gerichts 210 erfüllt sind. Für das vorliegende Beispiel eines Muffins kann beispielsweise gefordert sein, dass der Teig 215 ein Rührteig ist, der in einer charakteristischen Muffinform gebacken wird. Daraus ergeben sich bestimmte Verarbeitungsschritte, wie das Anrühren des Teigs 215 in einer Schüssel mit einem Handrührgerät, wobei der Teig 215 anschließend in Muffinförmchen gegeben und in einem Ofen gebacken wird.

Diese allen Basisbausteinvarianten 230, 232 gemeinsamen, stets stabilen Zubereitungsschritte nehmen eine besondere Rolle ein, da sie das prozessuale, stabile Grundgerüst eines Gerichts 210 darstellen. Über alle Varianten des Gerichts 210 hinweg ist die Existenz dieser verpflichtenden Verarbeitungsschritte und ihre Reihenfolge festgeschrieben. Sie stellen gewissermaßen den kleinsten gemeinsamen Nenner aller Grundrezeptvarianten dar.

Darüber hinaus kann das Template 225 noch optionale Verarbeitungsschritte umfassen, die von einer Basisbausteinvariante 230, 232 oder einer Aromabausteinvariante 235 aktiviert und entsprechend verwendet werden können oder nicht. Eine Variante eines Basisbausteins 230, 232 oder eines Aromabausteins 235 kann darüber hinaus private Verarbeitungsschritte definieren.

Ein Verarbeitungsschritt kann sich auf einen anderen abstützen, indem er beispielsweise eine Zutat oder ein Zwischenergebnis des anderen Verarbeitungsschritts weiterverarbeitet. Jede Art von Verarbeitungsschritt kann sich auf einen verpflichtenden Verarbeitungsschritt beziehen, weil dieser stets implementiert ist. Allerdings ist es nicht möglich, dass ein Verarbeitungsschritt einer ersten Bausteinvariante auf einen optionalen oder privaten Verarbeitungsschritt einer zweiten Bausteinvariante Bezug nimmt, weil der in Bezug genommene Verarbeitungsschritt nicht realisiert sein könnte, wenn die Bausteinvariante, welche den Verarbeitungsschritt enthält, gar nicht ausgewählt ist. Eine Bezugnahme eines Verarbeitungsschritts auf einen anderen innerhalb einer Bausteinvariante kann hingegen, zwischen allen Arten von Verarbeitungsschritten, möglich sein, da dessen Existenz innerhalb einer Variante immer bekannt ist.

An die Zusammensetzung eines privaten Verarbeitungsschritts können keinerlei Einschränkungen gestellt sein. Da diese nicht bausteinübergreifend interagieren müssen, können alle Attribute je nach Bedarf einer Bausteinvariante frei definiert werden. Ein optionaler Verarbeitungsschritt kann beispielsweise verpflichtend eine Handlung und ein Gefäß umfassen. Ein verpflichtender oder optionaler Verarbeitungsschritt kann zusätzlich optional ein Küchengerät angeben. Das verpflichtende Vorhandensein bestimmter Attribute ermöglicht somit die bausteinübergreifende Kommunikation.

Ein Verarbeitungsschritt umfasst bevorzugt eine allgemeine Handlung, eine auf eine Zutat beschriebene Tätigkeit sowie ein Gefäß, in welchem die Handlung oder Tätigkeit erfolgt. Zusätzlich kann beispielsweise ein Küchengerät, eine Gesamtdauer, eine Zutat sowie gegebenenfalls eines oder mehrere Attribute der Zutat, eine zusätzliche Handlung oder die Ausgabe einer Zeit an den Benutzer 135 von einem Verarbeitungsschritt umfasst sein.

Einem vom Verarbeitungsschritt umfasstes Element können noch zusätzliche Informationen oder Optionen zugeordnet sein. Beispielsweise kann zu einem Küchengerät angegeben sein, welches Zubehör verwendet werden soll oder auf welcher Programmstufe es laufen soll. Zur Erzeugung dieser Informationen können vorbestimmte Küchengeräte bekannt sein, deren Optionen und Programmstufen hinterlegt sind. So kann ein zu verwendendes Zubehörteil unabhängig von einem bestimmten Gerätetyp automatisch generiert werden.

Ein Gefäß kann beispielsweise eine Schüssel, einen Becher, einen Topf, eine Pfanne, ein Backblech oder eine Kasserolle umfassen. Eigenschaften der Gefäße können hinterlegt sein, um beispielsweise sicherzustellen, dass nur ein feuerfestes Gefäß in einem Verarbeitungsschritt verwendet wird, der ein Garen in einem Backofen umfasst. Ein Verarbeitungsschritt umfasst immer eine Hauptaktion, die dem Verarbeitungsschritt übergeordnet ist und kann darüber hinaus eine oder mehrere Begleitaktionen umfassen, die während der Hauptaktion durchgeführt werden soll. Die Begleitaktionen können dabei entsprechenden Zutaten zugeordnet sein. So kann beispielsweise ein Kochschritt als Begleitaktion das Einstreuen einer Zutat in ein Gefäß umfassen, wobei die Hauptaktion das Umrühren eines Gefäßinhalts umfassen kann. Für Verarbeitungsschritte kann ein bestimmtes zu erreichendes Resultat festgelegt sein, beispielsweise ein Teig, sowie optional eine Zustandsbeschreibung des Resultats, etwa cremig oder flockig. Eine voraussichtliche Bearbeitungszeit kann dem Benutzer 135 bereitgestellt werden, oder ein zu erreichendes Ergebnis kann angegeben sein. Im ersten Fall kann beispielsweise gefordert werden, dass Zwiebeln ca. 5 Minuten gebraten werden, im zweiten Fall, dass sie gebraten werden, bis sie goldgelb sind.

Da die Aromabausteinvariante 235 ein Aroma zu einer Basisbausteinvariante 230, 232 hinzufügt, umfasst er selbst üblicherweise keine verpflichtenden Verarbeitungsschritte, sondern bevorzugt nur optionale oder private Verarbeitungsschritte.

Im vorliegenden Beispiel kann das Template 225 beispielsweise festlegen, dass alle Basisbausteinvarianten 230, 232 des Teigs 215 für die Muffins 210 folgendes gemeinsam haben: es werden Zutaten in einer großen Rührschüssel mit einem Handmixer bei hoher Geschwindigkeit verrührt und der Teig wird immer in gefettete Muffinförmchen gegeben.

Optionale Verarbeitungsschritte des Templates 225 können beispielsweise angeben, ob in eine Teigmasse etwas untergehoben werden soll oder ob die Masse in einem Backprozess gebacken werden soll. Je nach Teig 215 wäre es hier also auch möglich, den Backschritt nicht auszufüllen, sodass ein ungebackener Muffin ("No-bake-Muffin") entstehen könnte.

Ein privater Verarbeitungsschritt kann sowohl von einer Basisbausteinvariante als auch von einer Aromabausteinvariante beigesteuert werden. Beispielsweise kann eine Basisbausteinvariante einen privaten Verarbeitungsschritt "Vermengen" definieren, der eine Zutat aus demselben Verarbeitungsschritt und ein Resultat eines Verarbeitungsschritts desselben Bausteins betrifft.

Wie bereits erwähnt, ist das Grundgerüst eines Gerichts 210 über die verpflichtenden Verarbeitungsschritte gleich, aber einzelne Zubereitungsschritte können je nach ausgewählter Bausteinvariante 230, 232, 235 eines Basis- bzw. Aromabausteins variieren. Private Verarbeitungsschritte einer Bausteinvariante 230, 232, 235 dürfen von Verarbeitungsschritten anderer Bausteinvarianten 230, 232, 235 nicht genutzt werden, da so die bausteinübergreifende Kommunikation verhindert würde. Im vorliegenden Beispiel der "Herzhaften Muffins mit Dip" bedeutet dies, dass die Basisbausteinvarianten 232 des Bausteins "Dip" 220 und die Aromabausteinvarianten 235 nicht auf einen privaten "Vermengen" Schritt der Basisbausteinvariante 230 des Teigs 215 zugreifen dürfen. Befindet sich in einer ausgewählten Bausteinvariante 230 für den Teig 215 nämlich kein verpflichtender "Vermengen" Schritt, so wäre fraglich, was mit einer Zutat passiert, die eine Bausteinvariante 232, 235 diesem privaten Verarbeitungsschritt hinzugefügt hätte.

Im Vergleich zu verpflichtenden Verarbeitungsschritten und optionalen Verarbeitungsschritten gibt es bei privaten Verarbeitungsschritten bevorzugt keine Voreinstellung bezüglich einer auszuführenden Aktion oder Handlung, eines zu benutzenden Gefäßes oder Küchengeräts. Diese können je nach benötigtem Zubereitungsschritt in einer Bausteinvariante frei ausgewählt werden, da sie unabhängig sind.

Optionale Verarbeitungsschritte werden benötigt, wenn eine Bausteinvariante mit einem Resultat eines Zubereitungsschrittes weiterarbeiten können soll. Private Verarbeitungsschritte werden hingegen verwendet, wenn Resultate nicht bausteinübergreifend verändert oder ergänzt werden sollen. So kann stets klar definiert sein, welche Bausteinvariante einen Verarbeitungsschritt nutzt und welche nicht. Durch die beschriebene Aufteilung von verpflichtenden, optionalen und privaten Schritten auf das Template 225, die Basisbausteine 230, 232 und die Aromabausteine 235 kann sichergestellt sein, dass unter den Verarbeitungsschritten keine Kollisionen erfolgen. So kann beispielsweise stets eindeutig definiert sein, in welcher Reihenfolge die Verarbeitungsschritte durchzuführen sind und an welcher Stelle Zutaten einer Aromabausteinvariante in Verarbeitungsschritten einer Basisbausteinvariante verwendet werden.

Hat sich der Benutzer 135 für einen Basisbaustein 230 für den Teig 215, für einen weiteren Basisbaustein 232 für den Dip 220 sowie für einen Aromabaustein 235 entschieden, so kann das Kochrezept 205 unter Verwendung des Templates 225 automatisch generiert werden. Das fertige Kochrezept 205 enthält eine Anzahl Verarbeitungsschritte, die aus den gewählten Bausteinvarianten 230, 232 entnommen und nach den Vorgaben des Templates 225 zusammengeführt sind.

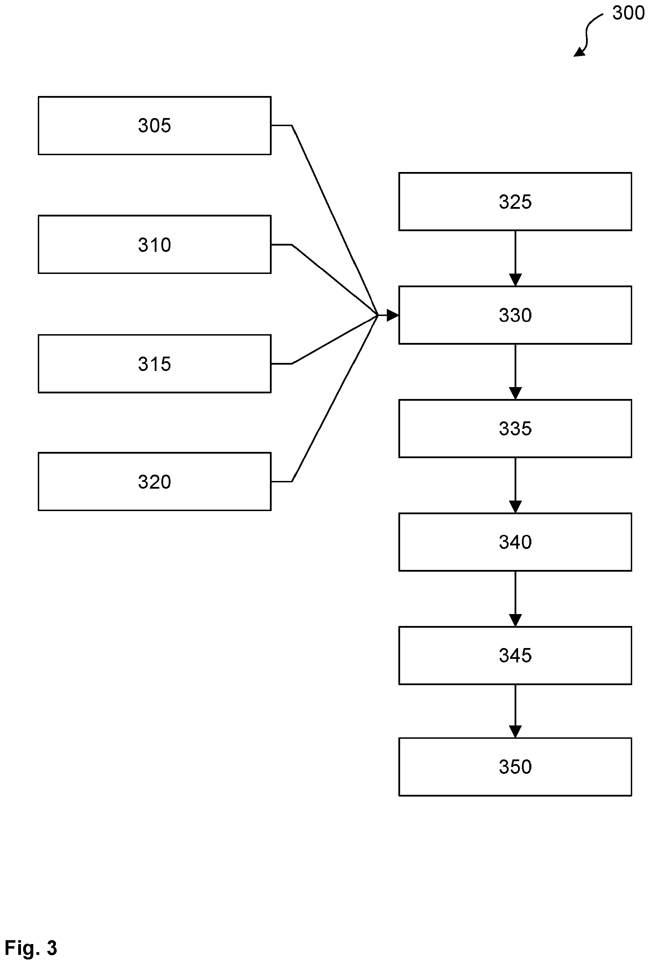

Figur 3 zeigt ein Ablaufdiagramm eines Verfahrens 300 zum Bereitstellen eines Kochrezepts 205 für ein vorbestimmtes Gericht 210. Zur Erläuterung der Ausführung wird im Folgenden auf das System 100 von Figur 1 Bezug genommen.

In einem Schritt 305 kann der vierte Datenspeicher 120 mit möglichen Zutaten sowie deren Attributen gefüllt werden. Ein Attribut kann beispielsweise angeben, ob die Zutat aromatisch ist oder nicht, unter welchen Handelsnamen sie erhältlich ist, ob sie vegetarisch, vegan, koscher, halal oder allergenhaltig ist, welchen ernährungsphysiologischen Brennwert sie aufweist, zu welcher Gruppe von Lebensmitteln sie zählt, welche Konsistenzen möglich sind etc. Derartige Angaben können aus einem einschlägigen Wissensspeicher übernommen werden.

In einem Schritt 310 kann eine Basisbausteinvariante 230, 232 im zweiten Datenspeicher 110 vorgesehen werden. Die Basisbausteinvariante 230, 232 kann beispielsweise von einem Koch für ein vorbestimmtes Gericht 210 erstellt werden.

In einem Schritt 315 kann ein Template 225 im ersten Datenspeicher 105 angelegt werden. Für jedes Gericht 210 existiert dort bevorzugt genau ein Template 225. Das Template 225 kann durch einen weiteren Koch erstellt werden. Das Template 225 legt fest, welche Bausteine 230, 232, 235 ein Kochrezept für das Gericht umfasst. Ein Baustein 230, 232, 235 wird jeweils durch eine Bausteinvariante realisiert, von denen bevorzugt jeweils mehrere zur Auswahl stehen.

In einem Schritt 320 kann eine Aromabausteinvariante 235 im dritten Datenspeicher 115 bereitgestellt werden. Das Erstellen der Aromabausteinvariante 235 kann ebenfalls durch einen Koch ausgeführt werden. Zur Erstellung können einer oder mehrere Basisbausteine 230, 232 berücksichtigt werden, die zur Bildung eines Kochrezepts 205 für das Gericht 210 verwendet werden können. Der Aromabaustein 235 kann eigenständig erstellt werden und hat die Möglichkeit, sich auf einen oder mehrere verpflichtende Verarbeitungsschritte der im Template festgelegten Basisbausteine zu beziehen.

Mit dem Befüllen der Datenspeicher 105 bis 120 kann das System 100 von Figur 1 in einen betriebsbereiten Zustand versetzt werden. Anschließend kann es dazu verwendet werden, ein Kochrezept 205 für ein Gericht 210 bereitzustellen. Es ist zu beachten, dass das in der beschriebenen Weise vorbereitete System 100 dazu eingerichtet ist, verschiedene Kochrezepte 205 nur eines einzigen Gerichts 210 zu erstellen. Natürlich können die genannten Schritte entsprechend wiederholt werden, um auch Kochrezepte 205 eines anderen Gerichts 210 zu erstellen. Ein Gericht 210 besteht dabei aus einer Vielzahl verschiedener Rezeptvarianten, die sich durch die Kombination der einzelnen Bausteinvarianten 230, 232, 235 ergeben.

In einem Schritt 325 kann eine Anforderung eines Benutzers 135 bestimmt werden, die eine Einschränkung innerhalb des Gerichts 210 betrifft. Insbesondere kann die Anforderung die Verwendung oder Vermeidung einer vorbestimmten Zutat oder eines vorbestimmten Zutatenattributs oder die Erfüllung einer vorbestimmten ernährungsphysiologischen Eigenschaft betreffen.

In einem Schritt 330 kann auf der Basis der Anforderung automatisch eine Vorauswahl verfügbarer Bausteine 230, 232, 235 getroffen werden. Danach können nur solche Bausteine 230, 232, 235 selektiert werden, deren Verwendung die Erfüllung der benutzergesteuerten Anforderung erlaubt. In einem Schritt 335 können dem Benutzer 135 die wählbaren Bausteine 230, 232, 235 dargestellt werden.

In einem Schritt 340 kann eine Auswahl des Benutzers 135 erfasst werden. Aus den ausgewählten Bausteinen 230, 232, 235 sowie des dem Gericht 210 zugeordneten Templates 225 kann dann in einem Schritt 345 ein Kochrezept 205 bestimmt werden.

Das Kochrezept 205 kann dem Benutzer 135 in einem Schritt 350 bereitgestellt werden. Dieser kann die im Kochrezept 205 enthaltenen Informationen umsetzen, um das Gericht 210 entsprechend zuzubereiten.

Die hier beschriebene neuartige Rezepttechnologie kann die Erstellung von Kochrezepten und damit die technische Bedienung von Hausgeräten erheblich vereinfachen und kann die Komplexität für Nutzer und Entwickler verringern. Insbesondere können Lebensmittelchemische und physikalische Kenntnisse hinsichtlich des Verhaltens von Zutaten erleichtert berücksichtigt werden. Technisches Wissen über die Funktionsweise von Hausgeräten kann verlässlich in die Erstellung von Kochrezepten einfließen.

### Bezugszeichen

- 100: System
- 105: erster Datenspeicher
- 110: zweiter Datenspeicher
- 115: dritter Datenspeicher
- 120: vierter Datenspeicher
- 125: Verarbeitungseinrichtung
- 130: Benutzerschnittstelle
- 135: Benutzer

- 200: Geflecht
- 205: Kochrezept
- 210: Gericht (Muffin)
- 215: erster Bestandteil (Teig, Basis)
- 220: zweiter Bestandteil (Dip)
- 225: Template
- 230: Basisbaustein / Basisbausteinvariante Teig
- 232: Basisbaustein / Basisbausteinvariante Dip
- 235: Aromabaustein /Aromabausteinvariante

- 300: Verfahren
- 305: Attribute von Zutaten bereitstellen
- 310: Basisbausteine bereitstellen
- 315: Template bereitstellen
- 320: Aromabausteine bereitstellen

- 325: benutzergesteuerte Anforderung bestimmen
- 330: Vorauswahl treffen
- 335: wählbare Bausteine bereitstellen
- 340: Auswahl erfassen
- 345: Kochrezept bestimmen
- 350: Kochrezept bereitstellen

## Patentansprüche

1. System (100) zur Erstellung von Kochrezepten (205) für ein vorbestimmtes Gericht (210), wobei das System (100) folgendes umfasst:
- einen ersten Datenspeicher (105) mit einem Template (225) für das Gericht (210);
- wobei das Template (225) wenigstens einen Basisbaustein (230, 232) und einen Aromabaustein (235) bestimmt;
- einen zweiten Datenspeicher (110) mit Basisbausteinvarianten für den wenigstens einen Basisbaustein (230, 232) des Templates (225);
- einen dritten Datenspeicher (115) mit Aromabausteinvarianten für den Aromabaustein (235) des Templates (225);
- eine Benutzerschnittstelle (130) zur Erfassung einer Auswahl einer Basisbausteinvariante für jeden Basisbaustein (230, 232) und einer Aromabausteinvariante für den Aromabaustein (235) des Templates (225); und
- eine Verarbeitungseinrichtung (125) zur Bestimmung eines Kochrezepts (205) auf der Basis des Templates (225) und der ausgewählten Bausteinvarianten.

2. System (100) nach Anspruch 1, wobei eine Basisbausteinvariante und eine Aromabausteinvariante jeweils wenigstens einen Verarbeitungsschritt umfasst, der eine Zutat angibt.

3. System (100) nach Anspruch 2, wobei wenigstens eine Zutat einer Aromabausteinvariante (235) aromatisch ist und alle Zutaten einer Basisbausteinvariante (230, 232) unaromatisch sind.

4. System (100) nach einem der Ansprüche 2 oder 3, wobei das Template (225) einen ersten Basisbaustein (230, 232) bestimmt, dem eine erste Basisbausteinvariante zugeordnet ist, und einen zweiten Basisbaustein (230, 232), dem eine zweite Basisbausteinvariante zugeordnet ist; wobei eine erste Zutat einer Aromabausteinvariante des Aromabausteins (235) der ersten Basisbausteinvariante und eine zweite Zutat der Aromabausteinvariante des Aromabausteins (235) der zweiten Basisbausteinvariante zugeordnet ist.

5. System (100) nach einem der vorangehenden Ansprüche, wobei das Template (225) Anforderungen für Verarbeitungsschritte umfasst, die durch Verarbeitungsschritte einer Bausteinvariante (230, 232, 235) ausgefüllt werden können.

6. System (100) nach einem der vorangehenden Ansprüche, wobei ein Basisbaustein wenigstens einen verpflichtenden Verarbeitungsschritt umfasst; und ein Basisbaustein und ein Aromabaustein jeweils einen oder mehrere optionale Verarbeitungsschritte umfassen kann; wobei ein optionaler Verarbeitungsschritt von einem verpflichtenden Verarbeitungsschritt oder einem anderen optionalen Verarbeitungsschritt abhängen kann.

7. System (100) nach Anspruch 6, wobei ein Basisbaustein (230, 232) oder ein Aromabaustein (235) jeweils einen oder mehrere private Verarbeitungsschritte umfassen kann, wobei ein privater Verarbeitungsschritt von einem anderen Verarbeitungsschritt abhängen kann; wobei kein Verarbeitungsschritt eines Bausteins (230, 232, 235) von einem privaten Verarbeitungsschritt eines anderen Bausteins (230, 232, 235) abhängt.

8. System (100) nach einem der vorangehenden Ansprüche, wobei ein vierter Datenspeicher mit Attributen von Zutaten von Verarbeitungsschritten von Bausteinen (230, 232, 235) des Gerichts (210) vorgesehen ist, und die Verarbeitungseinrichtung dazu eingerichtet ist, eine Eigenschaft des Gerichts (210) bezüglich eines oder mehrerer Bausteine (230, 232, 235) zu bestimmen.

9. System (100) nach einem der vorangehenden Ansprüche, wobei ein vierter Datenspeicher mit Attributen von Zutaten des Gerichts (210) vorgesehen ist, und die Verarbeitungseinrichtung dazu eingerichtet ist, bezüglich einer benutzergesteuerten Vorgabe einer Eigenschaft des Gerichts (210) eine Vorauswahl von wählbaren Bausteinen (230, 232, 235) zu treffen.

10. Hausgerätesystem, insbesondere Küchengerät oder Gargerät, das ein System nach einem der vorangehenden Ansprüche umfasst, wobei das Hausgerätesystem dafür eingerichtet ist, ein durch die Verarbeitungseinrichtung bestimmtes Kochrezept (205) automatisiert auszuführen.

11. Verfahren (300) zum Erstellen eines Kochrezepts (205) für ein vorbestimmtes Gericht (210), wobei das Verfahren folgende Schritte umfasst:
- Bereitstellen eines dem Gericht (210) zugeordneten Templates (225), wobei das Template (225) wenigstens einen Basisbaustein (230, 232) sowie einen Aromabaustein (235) bestimmt;
- Bereitstellen (310) wenigstens einer Basisbausteinvariante für jeden Basisbaustein (230, 232) des Templates (225);
- Bereitstellen (320) wenigstens einer Aromabausteinvariante für den Aromabaustein (235) des Templates (225);
- Erfassen (340) einer benutzergesteuerten Auswahl je einer Basisbausteinvariante für jeden Basisbaustein (230, 232) des Templates (225) sowie einer Aromabausteinvariante für den Aromabaustein (235) des Templates (225); und
- Bestimmen (345) eines Kochrezepts (205) auf der Basis der ausgewählten Varianten und des Templates (225).

12. Herstellungsverfahren zum Herstellen eines vorbestimmten Gerichts (210), das ein Verfahren nach Anspruch 11 umfasst, wobei das Herstellungsverfahren den Schritt umfasst:
- Automatisiertes Ausführen des bestimmten Kochrezepts (205), insbesondere mittels des Hausgerätesystems nach Anspruch 10.
